# EUROPEAN PATENT APPLICATION

(11) **EP 4 481 706 A1**
(43) Date of publication of application: **25.12.2024**
(21) Application number: 24181630.5
(22) Date of filing: 12.06.2024
(51) Int. Cl.: G08B 13/196, G08B 21/18, H04N 9/82, H04N 5/77, G11B 27/034, G05B 19/418

(54) **INFORMATION PROVIDING APPARATUS, INFORMATION PROVIDING METHOD, AND INFORMATION PROVIDING PROGRAM**

(30) Priority: 21.06.2023 JP 2023101939
(71) Applicant: Yokogawa Electric Corporation, Tokyo 180-8750 (JP)
(72) Inventor: KUMAKI, Takamasa, Musashino-shi, Tokyo, 180-8750 (JP)
(74) Representative: Winter, Brandl - Partnerschaft mbB

(57) **Abstract**

A server 10 according to an embodiment includes a selection unit (11) and a display control unit (13). The selection unit (11) selects, when a condition that is set in advance is satisfied, one or more pieces of image data that are associated with the condition from among a plurality of pieces of image data. The display control unit (13) simultaneously displays, when the condition is satisfied, the measurement data that has been measured by a measurement instrument and the image data that has been selected by the selection unit (11) on a single screen.

## Description

### FIELD

The present invention relates to an information providing apparatus, an information providing method, and an information providing program.

### BACKGROUND

The present invention relates to an information providing apparatus, an information providing method, and an information providing program.

Conventionally, there is a known technology for efficiently manage data by collectively recording, into a single file, measurement results of a temperature, a flow rate, a pressure, and the like that have been measured by measuring instruments installed in a plant and images that have been captured by a plurality of cameras installed in the plant (for example, see Japanese Patent No. 5979064).

Hereinafter, a process of recording the measurement results and the images into the single file or the like is referred to as a merge. Information on the merged file is sometimes displayed on a single screen. With the technology described in Japanese Patent No. 5979064, the measurement results and the plurality of images are displayed on a single screen.

In contrast, with the conventional technology, the visibility of the data is sometimes reduced. For example, all of the plurality of images displayed on the single screen are not always needed information for a person who browses the screen (for example, an administrator of a plant). If an image that is unnecessary for the browsing person is displayed on the screen, it is difficult to view the screen and it is thus difficult to efficiently obtain the necessary information.

### SUMMARY

It is an object of the present invention to at least partially solve the problems in the conventional technology.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a diagram illustrating an example of a configuration of an information providing system according to a first embodiment;
FIG. 2 is a diagram illustrating an example of a screen;
FIG. 3 is a diagram illustrating an example of a screen;
FIG. 4 is a diagram illustrating an example of a screen;
FIG. 5 is a diagram illustrating an example of a trigger based on a tag number;
FIG. 6 is a diagram illustrating an example of a trigger based on a group number;
FIG. 7 is a diagram illustrating an example of a trigger based on time;
FIG. 8 is a diagram illustrating an example of a trigger based on an external signal;
FIG. 9 is a diagram illustrating an example of a trigger based on an alarm level;
FIG. 10 is a flowchart illustrating the flow of a process performed by an information providing apparatus according to the first embodiment; and
FIG. 11 is a diagram illustrating an example of a hardware configuration.

### DESCRIPTION OF EMBODIMENTS

Preferred embodiments of an information providing apparatus, an information providing method, and an information providing program disclosed in the present invention will be described in detail below with reference to the accompanying drawings. Furthermore, the present invention is not limited to the embodiments. In addition, the same components are denoted by the same reference numerals and an overlapping description will be omitted. Each of the embodiments can be used in any appropriate combination as long as they do not conflict with each other. Furthermore, a protocol converter is one example of the information processing apparatus.

The information providing apparatus according to the present embodiment provides data obtained by merging measurement data that is a measurement result obtained by a measuring instrument that is installed in a facility, such as a plant, and image data on an image captured by a camera. Further, the image may be a still image or may be a moving image.

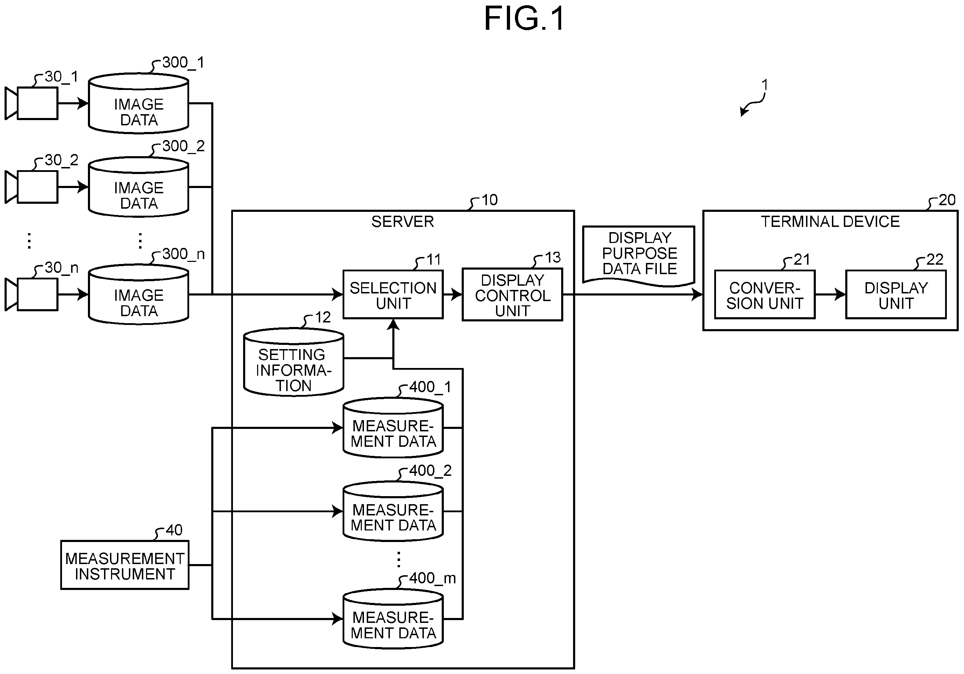

FIG. 1 is a diagram illustrating an example of a configuration of the information providing system according to a first embodiment. An information providing system 1 includes a server 10, a terminal device 20, a plurality of cameras (a camera 30_1, a camera 30_2, ..., and a camera 30_n), and a measurement instrument 40. Here, n denotes the number of cameras. In addition, m denotes the number of channels for the measurement data. The number of cameras and the number of channels for the measurement data are not limited to the numbers illustrated in the drawing. For example, n is 2 or more. The server 10 is one example of the information providing apparatus.

The channel may be one that corresponds to a location in which a target object that is to be measured by the measurement instrument 40 is present. Furthermore, the channel may be one that corresponds to each of the plurality of measurement instruments 40.

The server 10 acquires data on an image (hereinafter, referred to as "image data") that has been captured by each of the plurality of cameras. Furthermore, the server 10 acquires, for each channel, the pieces of measurement data that have been measured by the respective measurement instrument 40.

For example, the measurement instrument 40 is a sensor for measuring a physical amount of the plant instrument that is installed in the plant. The plant instrument is a tank, a pipe, a furnace, or the like. Furthermore, the physical amount is a temperature, pressure, a flow rate, or the like.

The server 10 periodically acquires the acquired image data and the measurement data and holds the acquired image data and the measurement data. Furthermore, the server 10 may be provided in an inside of the plant in which the measurement instrument and the cameras are installed. At this time, the server 10 is connected to the plurality of cameras, the measurement instrument 40, and the terminal device 20 via a network, such as Ethernet (registered trademark), that is provided in the inside of the plant.

Furthermore, the server 10 may be a cloud server that is connected to a device installed in the inside of the plant by the Internet, or the like.

The server 10 includes a selection unit 11 and a display control unit 13. Furthermore, the server 10 stores therein setting information 12.

The selection unit 11 selects, in accordance with a condition (hereinafter, referred to as a "trigger"), the image data targeted for a merge from among a plurality of pieces of image data. The setting information 12 is information for associating the trigger with the camera that captures an image of the image data targeted for the merge.

The display control unit 13 merges the measurement data with the image data that has been selected by the selection unit 11, and generates a display purpose data file. The display control unit 13 provides the generated display purpose data file to the terminal device 20. For example, the display purpose data file is an HTML file.

The terminal device 20 includes a conversion unit 21 and a display unit 22. The conversion unit 21 converts the display purpose data file to a format that is able to be displayed by an application installed in the terminal device 20.

The terminal device 20 functions as a viewer for browsing the display purpose data file that is provided from the server 10. In contrast, the server 10 records the measurement data and the image data, and functions as a logger that provides data that is able to be browsed by the viewer.

The display unit 22 displays a screen in accordance with the converted display purpose data file. The display unit 22 is a display device, such as a display.

Here, the number of pieces of image data included in the display purpose data file and the camera that has captured the image of the image data are changed in accordance with a result of selection performed by the selection unit 11. In other words, the number of images and the content of the image that are included in the screen displayed by the display unit 22 are changed in accordance with a trigger.

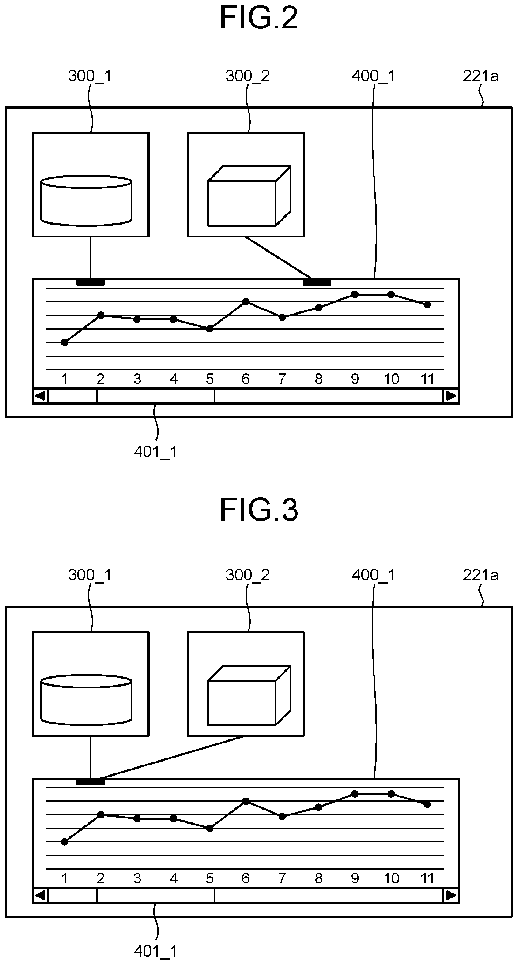

FIG. 2 illustrates an example of the screen displayed by the display unit 22. On a screen 221a illustrated in FIG. 2, image data 300_1, image data 300_2, and measurement data 400_1 are displayed. In this case, the selection unit 11 has already selected both of the image data 300_1 and the image data 300_2. Furthermore, the horizontal axis of the measurement data indicates time. As illustrated in FIG. 2, the times that are indicated in the measurement data 400_1 and that are associated with the respective image data 300_1 and the image data 300_2 are indicated by connecting lines between the times and the image data 300_1 and the image data 300_2. Furthermore, as illustrated in FIG. 3, a plurality of pieces of image data (here, both of the image data 300_1 and the image data 300_2) may be associated with the single time. Furthermore, when a slider 401_1 illustrated in each of FIG. 2 and FIG. 3 is operated, a portion associated with the range of the time corresponding to the position of the slider 401_1 indicated in the measurement data 400_1 is displayed.

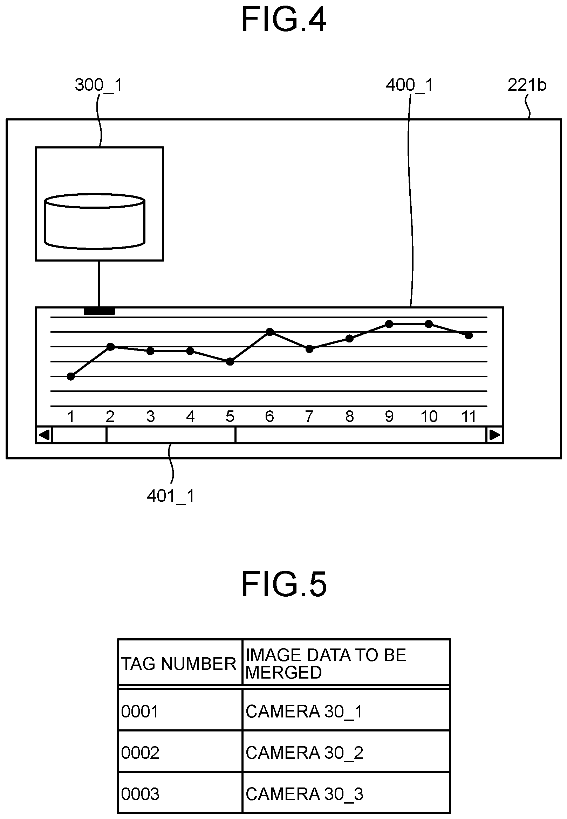

In contrast, on a screen 221b illustrated in FIG. 4, the image data 300_1 and the measurement data 400_1 are displayed. In this case, the selection unit 11 has already selected only the image data 300_1. In the example illustrated in FIG. 4, unlike FIG. 2 and FIG. 3, the number of the image data that has been selected is one, so that the number of connecting line is just one. Furthermore, in also FIG. 4, similarly to FIG. 2 and FIG. 3, when the slider 401_1 is operated, a portion associated with the range of the time corresponding to the position of the slider 401_1 indicated in the measurement data 400_1 is displayed.

It is conceivable that the image data that is needed by the browsing person varies according to a trigger. For example, in a situation in which the browsing person needs the image data 300_1 but does not need the image data 300_2, the server 10 provides the display purpose data file for displaying the screen 221b instead of the screen 221a. As a result of this, the server 10 is able to suppress the file size of the display purpose data file and improve the visibility of the data.

In the following, a specific example of the setting information 12 will be described. The server 10 may select the image data by independently using each of the triggers, or may select the image data by using the plurality of triggers in combination. Furthermore, the trigger explained here may be a trigger that is referred to when an alarm occurs. For example, the server 10 is able to refer to the setting information 12 at the time of occurrence of the alarm, and select the image data in accordance with the trigger. The alarm occurs in the case where, for example, a measurement value measured by the measurement instrument 40 exceeds a threshold.

### Trigger based on tag number

FIG. 5 is a diagram illustrating an example of a trigger based on the tag number. The tag number corresponds to, for example, a channel.

It is assumed that the tag numbers "0001", "0002", and "0003" correspond to the measurement data 400_1 illustrated in FIG. 1, the measurement data 400_2 illustrated in FIG. 1, and the measurement data 400_3 that is not illustrated, respectively.

In the example illustrated in FIG. 5, in the case where the measurement value indicated by the measurement data 400_1 that corresponds to the tag number "0001" exceeds the threshold (in the case where an alarm occurs), the selection unit 11 selects the image data 300_1 on an image captured by the camera 30_1. Moreover, the occurrence of the alarm is one example of a condition related to the measurement data.

### Trigger based on group number

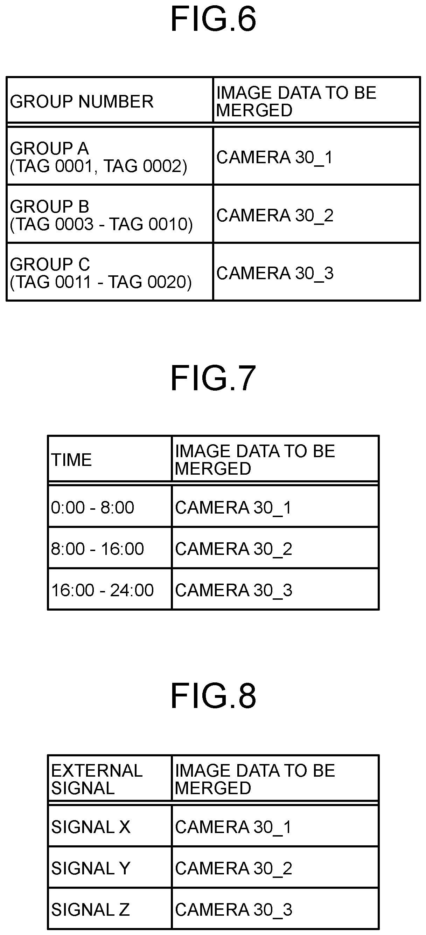

FIG. 6 is a diagram illustrating an example of a trigger based on a group number. As illustrated in FIG. 6, the plurality of tag numbers may be grouped. For example, in a group A, the tag numbers "0001" and "0002" are included.

In the example illustrated in FIG. 6, in the case where the measurement value indicated by the measurement data 400_1 and the measurement data 400_2 that correspond to the tag numbers "0001" and "0002", respectively, and that are included in the group A exceed the threshold (in the case where an alarm has occurred), the selection unit 11 selects the image data 300_1 on the image that is captured by the camera 30_1.

Furthermore, as illustrated in FIG. 6, in a trigger, a plurality of pieces of measurement data may be associated with a single piece of image data. Furthermore, in a trigger, the plurality of pieces of measurement data may be associated with the plurality of pieces of image data.

Furthermore, in the examples illustrated in FIG. 5 and FIG. 6, the display control unit 13 is able to merge the measurement data that is indicated by the condition with the image data that has been selected by the selection unit 11.

In this way, in the case where the condition that an alarm occurs with respect to one or more pieces of specific measurement data measured by the measurement instrument is satisfied, the selection unit 11 selects one or more pieces of image data that are associated with the one or more pieces of specific measurement data. As a result of this, the selection unit 11 is able to select the image data including the information related to the measurement data targeted for the occurred alarm.

### Trigger based on time

FIG. 7 is a diagram illustrating an example of the trigger based on the time. For example, the period of time, such as "0:00 to 8:00", "8:00 to 16:00", and "16:00 to 24:00", is associated with each of the pieces of image data.

In the example illustrated in FIG. 7, in the case where the measurement value indicated by one of the measurement data exceeds the threshold at the time "7:00" (in the case where an alarm has occurred), the selection unit 11 selects, as the image data associated with the period of time "0:00 to 8:00" that includes the time "7:00", the image data 300_1 that is captured by the camera 30_1.

In this way, in the case where the condition that the measurement data is measured by the measurement instrument in a specific time zone is satisfied, the selection unit 11 selects one or more pieces of image data that is associated with the specific time zone. As a result of this, the selection unit 11 is able to select the image data that includes useful information by taking into consideration of, for example, the time zone or the like in which the plant instrument is operated.

For example, it is conceivable that it is not possible to obtain useful information even if image data obtained by capturing an image of a certain plant instrument is selected in the time zone in which the certain plant instrument is not operated. In contrast, by associating in advance the operating time zone of the plant instrument with the image data obtained by capturing the image of the plant instrument, the selection unit 11 is able to select the image data that includes the useful information related to the plant instrument.

### Trigger based on external signal

FIG. 8 is a diagram illustrating an example of the trigger based on an external signal. The selection unit 11 may also select the image data on the basis of the external signal. The external signal is a signal that is able to be acquired by the server 10 separately from the measurement data. The external signal is provided from, for example, a monitoring system or the like that monitors the plant.

In the example illustrated in FIG. 8, in the case where the server 10 receives a signal X, the selection unit 11 selects the image data 300_1 that is captured by the camera 30_1.

In this way, in the case where the condition that the information providing apparatus has received a specific signal is satisfied, the selection unit 11 selects one or more pieces of image data that are associated with the specific signal. As a result of this, the selection unit 11 is able to select the image data that includes important information on the basis of the external signal even in the case where an alarm with respect to the measurement data has not occurred.

### Trigger based on alarm level

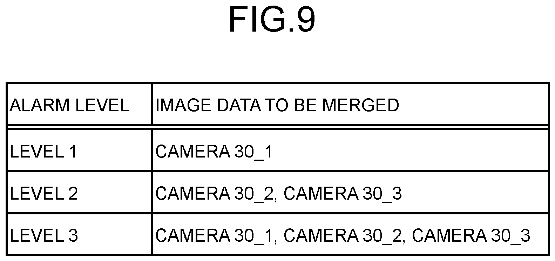

FIG. 9 is a diagram illustrating an example of the trigger based on an alarm level. For example, an alarm level is defined in accordance with a degree of importance of an event that corresponds to a cause of an occurrence of the alarm.

For example, it is assumed that measurement data indicates the temperature of a fluid that has been measured by a temperature sensor. A level 1 is an alarm level in the case where the temperature indicated by the measurement data is in the range of 100°C to 150°C. A level 2 is an alarm level in the case where the temperature indicated by the measurement data is in the range of 150°C to 200°C. A level 3 is an alarm level in the case where the temperature indicated by the measurement data is in the range of 200°C or more.

As the alarm level is higher, the degree of importance of the event is higher. Furthermore, the degree of importance of the event is higher, physical, human, or economic damage and a cost caused by the event are increased.

In the example illustrated in FIG. 9, in the case where the alarm level is the level 1, the selection unit 11 selects the image data 300_1 that is captured by the camera 30_1. Furthermore, in the case where the alarm level is the level 2, the selection unit 11 selects the image data 300_2 and the image data 300_3 that are captured by the camera 30_2 and the camera 30_3, respectively. Furthermore, in the case where the alarm level is the level 3, the selection unit 11 selects the image data 300_1, the image data 300_2, and the image data 300_3 that are captured by the camera 30_1, the camera 30_2, and the camera 30_3, respectively.

In this way, in the case where the condition that an alarm of the specific level occurs with respect to one or more pieces of specific measurement data that are measured by the measurement instrument is satisfied, the selection unit 11 selects one or more pieces of image data that are associated with the level. As a result of this, the selection unit 11 selects the image data from which an amount of information in accordance with the level of the alarm, that is, the degree of importance, can be obtained.

For example, as described above, in the case where the measurement data indicates the temperature of the fluid, the camera 30_1 captures an image of a tank for the fluid. Furthermore, for example, the camera 30_2 captures an image of a heater that heats the fluid. Furthermore, for example, the camera 30_3 captures an image of a control device that is used to control the degree of heating by the heater.

In this case, in the case where the alarm level in which the degree of importance is especially high is the level 3, the browsing person is able to further certainly find out the cause of the event by checking the situation of the tank, the heater, and the control device.

### Modification: Selecting image data by using rise rate of measurement value

The selection unit 11 may select the image data on the basis of a rise rate of the measurement value indicated by the measurement data in time series.

First, the selection unit 11 measures the period of time needed for the measurement value indicated by the measurement data to increase from the value corresponding to the alarm level 1 to the value corresponding to the alarm level 2. Then, the selection unit 11 calculates the rise rate as (V2 - V1)/t, where the value corresponding to the alarm level 1 is denoted by V1, the value corresponding to the alarm level 2 is denoted by V2, and the period of time is denoted by t.

For example, in the case where the rise rate is less than the threshold (t is long), the selection unit 11 selects the image data 300_1. In contrast, in the case where the rise rate is equal to or larger than the threshold (t is short), the selection unit 11 selects the image data 300_2. In other words, the image data is associated with the rise rate. The image data 300_1 is associated with the rise rate that is less than the threshold. The image data 300_2 is associated with the rise rate that is equal to or larger than the threshold.

It is conceivable that the degree of importance of the event is higher as the rise rate is higher. For example, in the case where the temperature and the pressure of the tank rises sharply, this may possibly lead to a serious accident resulting in, for example, damage of the tank.

Furthermore, the selection unit 11 allocates the measurement date and time to the selected image data in time series and holds the allocated information. Then, the selection unit 11 compares the pieces of image data that are allocated in time series, and selects the image data having a large difference (a large change over time).

For example, the selection unit 11 compares the image data allocated to each time with the image data allocated to the time adjacent to the time to be compared, and calculates the difference. For example, the difference between the pieces of image data is, for example, a sum of the differences of the pixel values of the adjacent pixels.

Furthermore, the selection unit 11 may also select the image data that has been captured by the camera in which the setting that corresponds to the trigger has been made, instead of selecting the image data that has been captured by the camera corresponding to the trigger.

For example, examples of the camera include a zoom magnification of the camera that captures the image, a switch between an actual video image and a thermograph, and a switch between on and off of light.

In this way, in the case where the condition that the measurement data measured by the measurement instrument rises at a specific rise rate is satisfied, the selection unit 11 selects the image data in which the magnitude of the change in time series is equal to or larger than the threshold from among the pieces of image data in time series that are associated with the rise rate. As a result of this, the selection unit 11 is able to select the image data that indicates the cause of the rise in the measurement data.

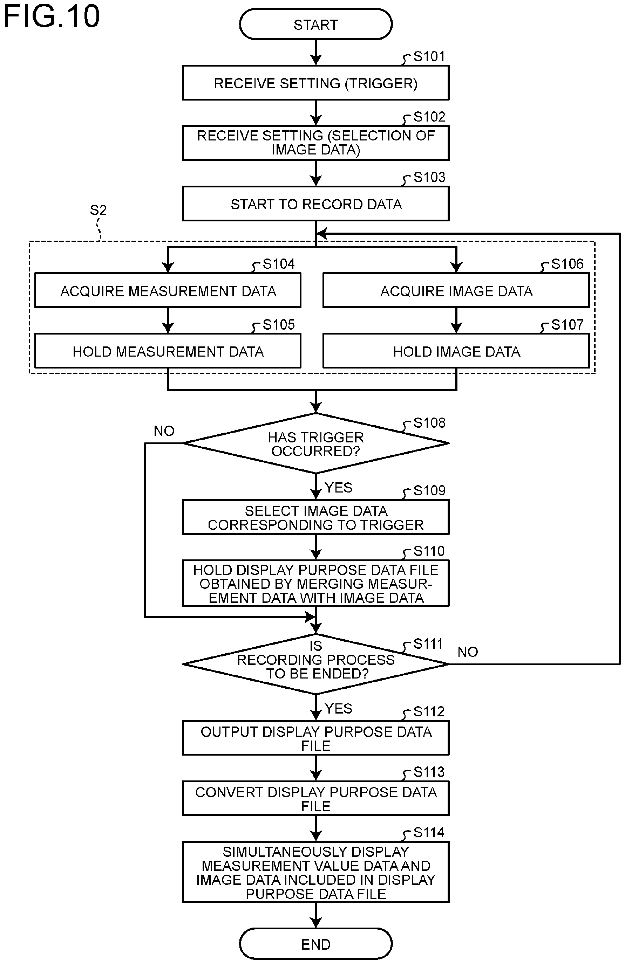

In the following, the flow of the process performed by the server 10 will be described with reference to FIG. 10. FIG. 10 is a flowchart illustrating the flow of the process performed by the information providing apparatus (the server 10) according to the first embodiment.

As illustrated in FIG. 10, first, the server 10 receives the setting of the trigger and the image data to be selected (Steps S101 and S102). Here, the server 10 starts to record the measurement data and the image data (Step S103).

Then, the server 10 simultaneously performs recording processes on the measurement data and the image data (Step S2). The server 10 acquires the measurement data that has been measured by the measurement instrument 40 (Step S104), and holds the measured measurement data (Step S105). Furthermore, the server 10 acquires the image data that has been captured by the plurality of cameras (Step S106), and holds the acquired image data (Step S107).

If the trigger that has been set at Step S101 has occurred (Yes at Step S108), the server 10 selects the image data corresponding to the trigger (Step S109). Then, the server 10 holds the display purpose data file that is obtained by merging the measurement data with the selected image data (Step S 110).

If the trigger has not occurred (No at Step S108), or if the process at Step S110 has been ended, the server 10 determines whether or not the recording processes of the measurement data and the image data are to be ended (Step S111). For example, if specified time has elapsed after the start of the record (Step S103), the server 10 determines to end the recording processes.

If the server 10 does not end the recording processes (No at Step S111), the server 10 returns to the processes at Step S2 and repeats the processes.

If the server 10 ends the recording processes (Yes at Step S111), the server 10 outputs the display purpose data file to the terminal device 20 (Step S112).

After that, the server 10 allows the terminal device 20 to convert the display purpose data file (Step S113), and simultaneously display the measurement value data and the image data (Step S114).

### Effects

As described above, the server 10 includes the selection unit 11 and the display control unit 13. In the case where the condition that is set in advance is satisfied, the selection unit 11 selects one or more pieces of image data that are associated with the condition from among the plurality of pieces of image data. In the case where the condition is satisfied, the display control unit 13 simultaneously displays, on the single screen, the measurement data that has been measured by the measurement instrument and the image data that has been selected by the selection unit 11.

In this way, the server 10 selects the needed image data in accordance with the condition, merges the selected image data with the measurement data, and displays the merged data on the single screen. As a result of this, it is possible to reduce the size of the data that has been merged, and it is also possible to improve the visibility of the data on the screen.

### System

The flow of the processes, the control procedures, the specific names, and the information containing various kinds of data or parameters indicated in the above specification and drawings can be arbitrarily changed unless otherwise stated.

Furthermore, the components of each unit illustrated in the drawings are only for conceptually illustrating the functions thereof and are not always physically configured as illustrated in the drawings. In other words, the specific shape of a separate or integrated device is not limited to the drawings. Specifically, all or part of the device can be configured by functionally or physically separating or integrating any of the units depending on various loads or use conditions.

Furthermore, all or any part of each of the processing functions performed by the each of the devices can be implemented by a CPU and by programs analyzed and executed by the CPU or implemented as hardware by wired logic.

### Hardware

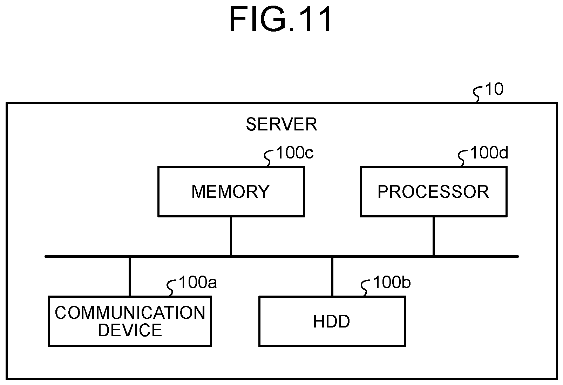

In the following, an example of a hardware configuration of the server 10 will be described. FIG. 11 is a diagram illustrating an example of the hardware configuration. As illustrated in FIG. 11, the server 10 includes a communication device 100a, a hard disk drive (HDD) 100b, a memory 100c, and a processor 100d. Furthermore, each of the units illustrated in FIG. 11 is connected by a bus or the like with each other.

The communication device 100a is a network interface card or the like, and communicates with another server. The HDD 100b stores therein the programs and the DBs that operate the functions illustrated in FIG. 1.

The processor 100d operates the process that executes each of the functions described above in FIG. 1 or the like by reading the programs that execute the same process as that performed by each of the processing units illustrated in FIG. 1 from the HDD 100b or the like and loading the read programs in the memory 100c. For example, the process executes the same functions as those performed by each of the processing units included in the server 10. Specifically, the processor 100d reads, from the HDD 100b or the like, the program having the same function as that performed by a collection unit 151, an evaluation unit 152, and a display control unit 153. Then, the processor 100d executes the process for executing the same process as that performed by the collection unit 151, the evaluation unit 152, and the display control unit 153.

In this way, the server 10 is operated as an information processing apparatus that performs an information processing method by reading and executing the program. Furthermore, the server 10 is also able to implement the same functions as those described above in the embodiment by reading the above described program from a recording medium by a medium reading device and executing the read program. In addition, the program described in another embodiment are not limited to be executed by the server 10. For example, the present invention may also be similarly used in a case in which another computer or a server executes a program or in a case in which another computer and a server cooperatively execute the program with each other.

The programs may be distributed via a network, such as the Internet. Furthermore, the program may be executed by storing the programs in a recording medium that can be read by a computer readable medium, such as a hard disk, a flexible disk (FD), a CD-ROM, a magneto-optical disk (MO), a digital versatile disk (DVD), or the like, and read the programs from the recording medium by the computer.

Some examples of combinations of the disclosed technical features are described in the following.

According to an aspect of an embodiment, it is possible to improve the visibility of data.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An information providing apparatus comprising:
a selection unit (11) that selects, when a condition that is set in advance is satisfied, one or more pieces of image data that are associated with the condition from among a plurality of pieces of image data; and
a display control unit (13) that simultaneously displays, when the condition is satisfied, measurement data that has been measured by a measurement instrument and the image data that has been selected by the selection unit (11) on a single screen.

2. The information providing apparatus according to claim 1, wherein, when the condition related to one or more pieces of specific measurement data that are measured by the measurement instrument is satisfied, the selection unit (11) selects one or more pieces of the image data that are associated with one or more pieces of the specific measurement data.

3. The information providing apparatus according to claim 1, wherein, when the condition that the measurement data is measured by the measurement instrument in a specific time zone is satisfied, the selection unit (11) selects one or more pieces of the image data that are associated with the specific time zone.

4. The information providing apparatus according to claim 1, wherein, when the condition that the information providing apparatus has received a specific signal is satisfied, the selection unit (11) selects one or more pieces of the image data that are associated with the specific signal.

5. The information providing apparatus according to claim 1, wherein, when the condition that an alarm with a specific level occurs with respect to one or more pieces of specific measurement data that are measured by the measurement instrument is satisfied, the selection unit (11) selects one or more pieces of the image data that are associated with the level.

6. The information providing apparatus according to claim 1, wherein, when the condition that a rise rate of the measurement data measured by the measurement instrument is equal to or larger than a threshold is satisfied, the selection unit (11) selects the image data that is associated with the rise rate that is equal to or larger than the threshold.

7. An information providing method that causes a computer to execute a process comprising:
selecting, when a condition that is set in advance is satisfied, one or more pieces of image data that are associated with the condition from among a plurality of pieces of image data; and
displaying simultaneously, when the condition is satisfied, measurement data that has been measured by a measurement instrument and the selected image data on a single screen.

8. An information providing program causing a computer to execute processing comprising:
selecting, when a condition that is set in advance is satisfied, one or more pieces of image data that are associated with the condition from among a plurality of pieces of image data; and
displaying simultaneously, when the condition is satisfied, measurement data that has been measured by a measurement instrument and the selected image data on a single screen.
